# EUROPÄISCHE PATENTANMELDUNG

(11) **EP 0 873 865 A2**
(43) Veröffentlichungstag der Anmeldung: **28.10.1998**
(21) Anmeldenummer: 98107244.0
(22) Anmeldetag: 21.04.1998
(51) Int. Cl.: B32B 31/08, B32B 27/12

(54) **Verfahren zur Herstellung eines Verbundbauelements und Verbundbauelement**

(30) Priorität: 24.04.1997 DE 29707311 U
(71) Anmelder: Möller Plast GmbH, 33649 Bielefeld (DE)
(72) Erfinder: Löw, Wolfgang, 65468 Trebur (DE)
(74) Vertreter: Schirmer, Siegfried, Dipl.-Ing.

(57) **Zusammenfassung**

Auf die von der Herstellung noch eine Restwärme aufweisende Schaumfolie (12) wird unter Verwendung von Kalandrierwalzen (2; 3) ein Dekormaterial (5) aufgebracht und dadurch eine Verbundwirkung erzielt. Aus diesem Verbundbauteil in Form eines endlosen Bandes werden Formteile (11) geformt und diese Formteile (11) aus dem endlosen Band herausgetrennt und anschließend hinterspritzt, hinterblasen oder hinterpreßt.

## Beschreibung

Die Erfindung betrifft ein Verfahren zur Herstellung eines Verbundbauelements, bei dem ein Dekormaterial und eine Kunststoffmasse zu einer Einheit verbunden werden und ein nach dem Verfahren hergestelltes Verbundbauelement.

Bei der Verarbeitung von Dekormaterial, beispielsweise Textilien, Folien oder Leder, durch z. B. Hinterspritz-, Hinterpreß- oder Hinterblasverfahren ist nicht auszuschließen, daß sich im Dekormaterial Schiebefronten bilden, die Zu Oberflächendefekten führen. Außerdem kann durch den Schmelzedruck, insbesondere im Spritzgießverfahren, die Oberflache des Dekormaterials in Mitleidenschaft gezogen werden. Es ist nicht auszuschließen, daß bei bekannten Dekormaterialien die dünnflüssige Kunststoffschmelze durch das Dekormaterial durchströmt und dadurch die Ästhetik der Oberfläche negativ beeinträchtigt wird.

Der Erfindung liegt die Aufgabe zugrunde, ein Verfahren zur Herstellung eines Verbundbauelements zu schaffen, ohne daß bei einem Hinterspritzen, Hinterpressen oder Hinterblasen die Gefahr besteht, daß die Lage und/oder die Oberfläche des Dekormaterials negativ beeinflußt wird.

Diese Aufgabe wird erfindungsgemäß dadurch gelöst, daß zunächst eine Schaumfolie erzeugt und auf die noch eine Restwärme aufweisende Schaumfolie ein Dekormaterial unter Verwendung von Kalandrierwalzen aufgebracht und dadurch eine Verbundwirkung erzielt wird.

In Ausgestaltung der Erfindung werden aus dem aus Schaumfolie und Dekormaterial bestehenden Verbundbauteil in Form eines endlosen Bandes Formteile geformt und diese Formteile aus dem endlosen Band herausgetrennt. Es besteht die Möglichkeit, die Formteile zu hinterspritzen, zu hinterblasen, zu hinterpressen oder, da die Formteile bereits eine gewisse Biegesteifigkeit aufweisen, zur Gewichtsreduzierung lediglich mit Verstärkungsrippen zu versehen, was vorteilhafterweise durch eine entsprechende Hinterspritzung erfolgt.

Es liegt im Wesen der Erfindung, daß die Schaumfolie mit einer Extrusionsmaschine mit nachgeschalteter Breitschlitzdüse hergestellt wird, wobei die Schaumfolie aus Thermo- oder Duroplasten, die mit chemischen oder physikalischen Treibmitteln versetzt werden, gebildet sein können. Zweckmäßigerweise wird das aus Schaumfolie und Dekormaterial bestehende Verbundbauteil vor dem Formen der Formteile über eine auf der Schaumseite angeordnete Heizung beheizt. Nach der Erfindung besteht auch die Möglichkeit, das aus Schaumfolie und Dekormaterial bestehende Verbundbauteil in Form einer Rolle zwischenzulagern.

Das nach dem erfindungsgemäßen Verfahren hergestellte Verbundbauteil ist durch die Verbindung einer Schaumfolie mit einem Dekormaterial und daraus hergestellte Formteile gekennzeichnet. Diese Formteile können hinterspritzt, hinterblasen oder hinterpreßt sein. Es besteht auch die Möglichkeit, die Formteile lediglich mit Verstärkungsrippen zu versehen.

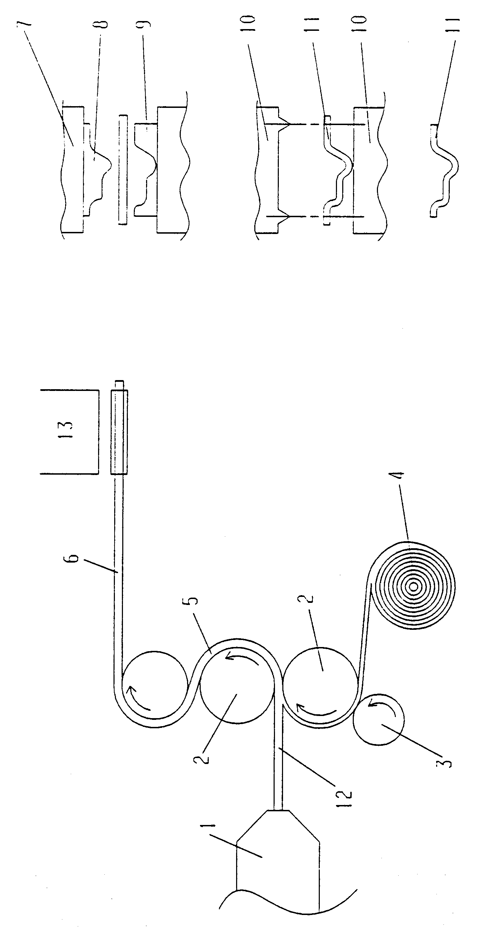

Das erfindungsgemäße Herstellungsverfahren soll an einem Ausführungsbeispiel näher erläutert werden. In der einzigen Figur ist der Verfahrensablauf schematisch dargestellt.

Mit einer Extrusionsmaschine mit nachgeschalteter Breitschlitzdüse 1 wird eine Schaumfolie 12 erzeugt, wobei die zur Herstellung dienenden Thermo- oder Duroplasten mit chemischen oder physikalischen Treibmitteln versetzt sind. Diese Treibmittel zersetzen sich in der Wärme und das entstehende Gas löst sich wegen des Extrusionsdrucks in der Schmelze. Beim Austritt der Schmelze aus der Düse 1 findet eine Druckentlastung statt, wodurch die Schmelze vom Gasdruck aufgeschäumt wird. Die so gebildete Schaumfolie 12 wird einem Klettwerk 2 zugeführt. Gleichzeitig mit der Schaumfolie 12 wird dem Klettwerk 2 das von einer Textilrolle 4 ablaufende Textil über eine Andruckwalze 3 zugeführt. Durch die Restwärme der Schaumfolie 12 erfolgt im Klettwerk 2 eine mechanische Verbindung zwischen dem Textilmaterial 5 und der Schaumfolie 12. Das so gebildete Verbundbauelement wird nun einer Formmaschine 7 zugeführt, zuvor jedoch auf der Schaumfolienseite 6 durch eine Heizung 13 beheizt. In der Formmaschine 7 findet durch den Oberstempel 8 eine Verformung im Werkzeug 9 mit Vakuumunterstützung statt. In einer nachgeschalteten Formstanze 10 wird das hergestellte Formteil 11 von der Restschaumfolie 12 gelöst. Die so hergestellten Formteile 11 werden in ein Blas- oder Spritzgießwerkzeug eingelegt und hinterblasen oder hinterspritzt. Dabei schützt die Schaumfolie das Textilmaterial vor der hohen Verarbeitungstemperatur und sorgt für eine gleichmäßige Druckverteilung, wodurch das sonst übliche Aufdämpfen zur Wiedererlangung der Textilflauschigkeit entfällt. Außerdem werden Schiebefronten durch den Schmelzdruck beim Hinterspritzen vermieden.

### Aufstellung der Bezugszeichen:

- 1: Breitschlitzdüse
- 2: Klettwerk
- 3: Andruckwalze
- 4: Dekorrolle
- 5: Dekormaterial
- 6: Schaumfolienseite
- 7: Formmaschine
- 8: Oberstempel
- 9: Werkzeug
- 10: Formstanze
- 11: Formteil
- 12: Schaumfolie
- 13: Heizung

## Patentansprüche

1. Verfahren zur Herstellung eines Verbundbauelements, bei dem ein Dekormaterial und eine Kunststoffmasse zu einer Einheit verbunden werden, dadurch gekennzeichnet, daß zunächst eine Schaumfolie (12) erzeugt und auf die noch eine Restwärme aufweisende Schaumfolie (12) ein Dekormaterial (5) unter Verwendung von Kalandrierwalzen (2; 3) aufgebracht und dadurch eine Verbundwirkung erzielt wird.

2. Verfahren nach Anspruch 1, dadurch gekennzeichnet, daß aus dem aus Schaumfolie (12) und Dekormaterial (5) bestehenden Verbundbauteil in Form eines endlosen Bands Formteile (11) geformt und diese Formteile (11) aus dem endlosen Band herausgetrennt werden.

3. Verfahren nach Anspruch 1 oder 2, dadurch gekennzeichnet, daß die fertigen Formteile (11) hinterspritzt, hinterblasen oder hinterpreßt werden.

4. Verfahren nach Anspruch 1 oder 2, dadurch gekennzeichnet, daß die fertigen Formteile (11) mit Verstärkungsrippen durch Hinterspritzung versehen werden.

5. Verfahren nach einem der Ansprüche 1 bis 4, dadurch gekennzeichnet, daß die Schaumfolie (12) mit einer Extrusionsmaschine mit nachgeschalteter Breitschlitzdüse (1) hergestellt wird.

6. Verfahren nach einem der Ansprüche 1 bis 5, dadurch gekennzeichnet, daß die Schaumfolie (12) aus Thermo- oder Duroplasten gebildet wird.

7. Verfahren nach Anspruch 6, dadurch gekennzeichnet, daß die Thermo- oder Duroplasten mit chemischen oder physikalischen Treibmitteln versetzt werden.

8. Verfahren nach einem der Ansprüche 1 bis 7, dadurch gekennzeichnet, daß das aus Schaumfolie (12) und Dekormaterial (5) bestehende Verbundbauteil vor dem Formen der Formteile (11) über eine auf der Schaumseite (6) angeordnete Heizung (13) beheizt wird.

9. Verfahren nach Anspruch 1, dadurch gekennzeichnet, daß das aus Schaumfolie (12) und Dekormaterial (5) bestehende Verbundbauteil in Form einer Rolle zwischengelagert wird.

10. Verbundbauelement nach einem der Ansprüche 1 bis 9, gekennzeichnet durch die Verbindung einer Schaumfolie (12) mit einem Dekormaterial (5) und daraus hergestellte Formteile (11).

11. Verbundbauelement nach Anspruch 10, dadurch gekennzeichnet, daß die Formteile (11) hinterspritzt, hinterblasen oder hinterpreßt sind.

12. Verbundbauelement nach Anspruch 10, dadurch gekennzeichnet, daß die Formteile (11) mit Verstärkungsrippen versehen sind.
